# EUROPEAN PATENT SPECIFICATION

(11) **EP 1 414 720 B1**
(45) Date of publication and mention of the grant of the patent: **02.04.2008**
(21) Application number: 02749219.8
(22) Date of filing: 22.07.2002
(51) Int. Cl.: B65G 1/00

(54) **METHOD FOR CONTROLLING THE OPERATION OF A TRANSPORT SYSTEM FOR CONTAINERS, OPERATING DEVICE AND TRANSPORT SYSTEM THUS CONTROLLED**
VERFAHREN ZUR STEUERUNG DES BETRIEBES EINES BEHÄLTERFÖRDERERS, BEDIENVORRICHTUNG UND AUF DIESE WEISE GESTEUERTES FÖRDERSYSTEM
PROCEDE DE COMMANDE DE L'ACTIONNEMENT D'UN TRANSPORTEUR DE CONTENANTS, DISPOSITIF DE COMMANDE ET TRANSPORTEUR AINSI COMMANDÉ

(30) Priority: 10.08.2001 IT BO20010517
(43) Date of publication of application: 06.05.2004
(73) Proprietor: CPS Color Equipment S.p.A. con unico socio, 41038 San Felice sul Panaro, MO (IT)
(72) Inventor: AVANZI, Roberto, 41034 Massa Finalese (Modena) (IT); MANFREDI, Pietro, 41037 Mirandola (Modena) (IT)
(74) Representative: Petraz, Gilberto Luigi
(86) International application number: PCT/IB2002/002977
(87) International publication number: WO 2003/029110

(56) References cited:
- EP-A- 0 559 480
- DE-A- 2 921 632
- DE-A- 3 214 999
- US-A- 3 861 520
- US-A- 5 738 203

## Description

The present invention relates to a method for controlling the operation of a container transport system. The invention also concerns an operating device adapted to be controlled by the aforesaid method, and also a transport system for containers which is thus controlled. The invention has been developed with particular regard to a transport system of the type in which the containers, disposed in a line and spaced from one another at regular intervals, are moved simultaneously and displaced along a predetermined path by a step equal to the distance between one container and another, such that each container assumes at each step the same position as the container which precedes it in line.

Reference is made here to document US-A- 3861 520.

Movement systems of the type indicated above are used in installations in which such containers must reach in progression a series of predetermined positions or stations placed along the path. Such systems are used, for example, in production lines for paints or varnishes in which the containers, initially empty, are brought in sequence beneath paint and colorant dispensing machines, which are arranged to deliver fluid products inside the containers themselves. In installations of this type, the containers must frequently be transported along very long paths, and still arrive precisely at specific positions. It is readily understood that small errors in the positioning of each container at each individual step of its displacement may result in deviations and shifting of the container from the final position envisaged after a certain number of steps, which shifts may also be considerable because of the sum of the individual errors of positioning at each step. In order to remedy these problems, many transport systems of the prior art provide more or less complex centring means in order to guarantee the correct positioning of the containers after each advance step.

A transport system for containers which has proved particularly efficacious is the subject of Patent Application PCT/IT01/00066 of the same Applicant. In such a transport system, the containers are placed on a modular support structure which extends along the path which the containers themselves must travel. Each module of the aforesaid support structure comprises a fixed portion, on which are placed the containers lined up in a row, and a movable portion which can be actuated so as to raise the containers from the fixed portion, transport them forwards for a predetermined distance, preferably equal to the pitch between one container and the other, and place them on the fixed portion again before returning to the initial position from which to start a new cycle.

In the transport systems of known type, the movement of the containers is obtained by means of systems which comprise cams or connecting rod/crank units. The operating means with cams are generally difficult to produce and do not make it possible to modify the behaviour of the transport system without modifying the profile of the cam. Moreover, the gradual wearing of the cam results in a corresponding reduction in the accuracy of operation of the transport system, with the negative consequences mentioned above with regard to the positioning of the containers.

The transport systems which are operated by means of connecting rod/crank systems generally require very bulky devices in order to obtain the speeds and strokes necessary for effective advancement of the containers.

An aim of the present invention is that of providing a method for the operation of a transport system which solves or prevents the drawbacks mentioned above, and in particular makes it possible to move the containers by a precisely predetermined amount without the occurrence of deviations or accidental shifts from the position envisaged for each container at each step of the transport system. Another aim of the invention is that of providing a method which is simple and economic in execution.

Yet another aim of the invention is that of providing an operating device which is simple to manufacture and maintain, is compact and permits flexible adjustment of the operation of the transport system for the containers, according to the operating method mentioned above.

A further aim of the invention is that of providing a transport system adapted to be controlled according to the aforesaid method, and comprising an operating device of the type mentioned above.

In order to fulfil the aforesaid aims, the present invention has as its subject a method, an operating device and a transport system-as defined in the claims which follow.

Further characteristics and advantages will become clear from the following description of a preferred embodiment, with reference to the appended drawings, provided purely by way of non-limiting example, in which:
- Figures 1, 2, 3 and 4 illustrate diagrammatically a transport system in four different positions, corresponding to as many phases of the movement of a line of containers,
- Figure 5 is a diagrammatic perspective view of an operating device suitable for moving the transport system of the preceding figures, and
- Figure 6 is a diagram which shows the preferred course of the velocity in the principal direction of displacement of the movable part of the transport system controlled according to the present invention.

With reference now to the drawings, a transport system for containers, preferably, but not exclusively, of the type which is the subject of Patent Application PCT/IT01/00066, comprises a support structure 10 with a fixed portion 11, which is for example placed or locked on the ground by means of feet 12. Onto the fixed portion 11 are placed containers 13 disposed in a line, spaced from one another by a predetermined amount or pitch P.

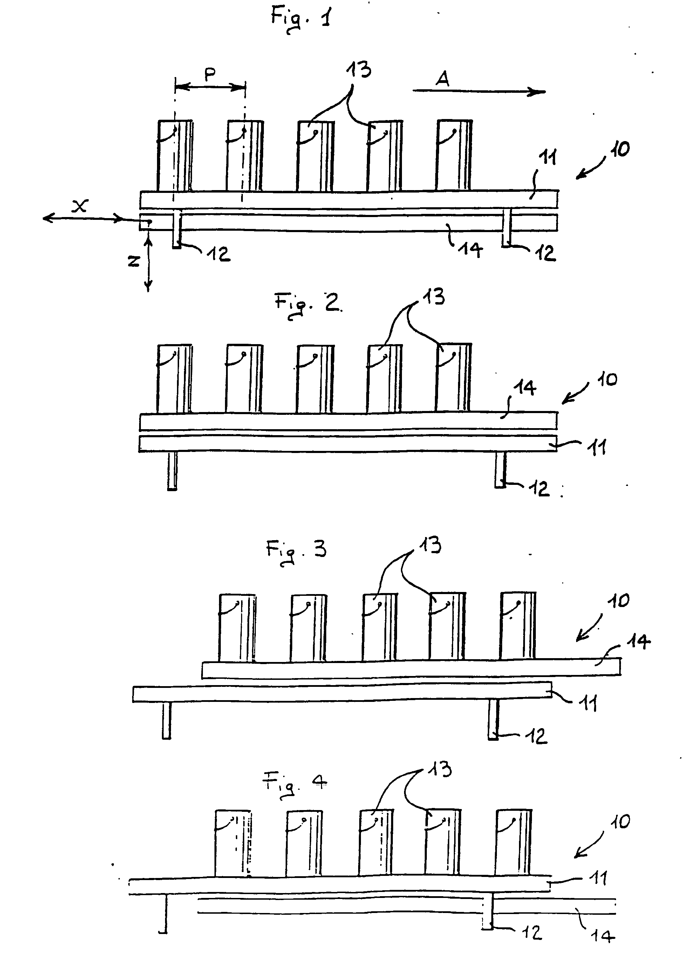

The support structure 10 further comprises a movable portion 14, adapted to be moved in two substantially perpendicular directions X, Z, preferably with the assistance of separate movement devices that can be operated independently of one another or in combination with each other. The direction X is furthermore substantially parallel to the direction of advance A of the containers 13, which conventionally is directed towards the right in Figures 1 to 4.

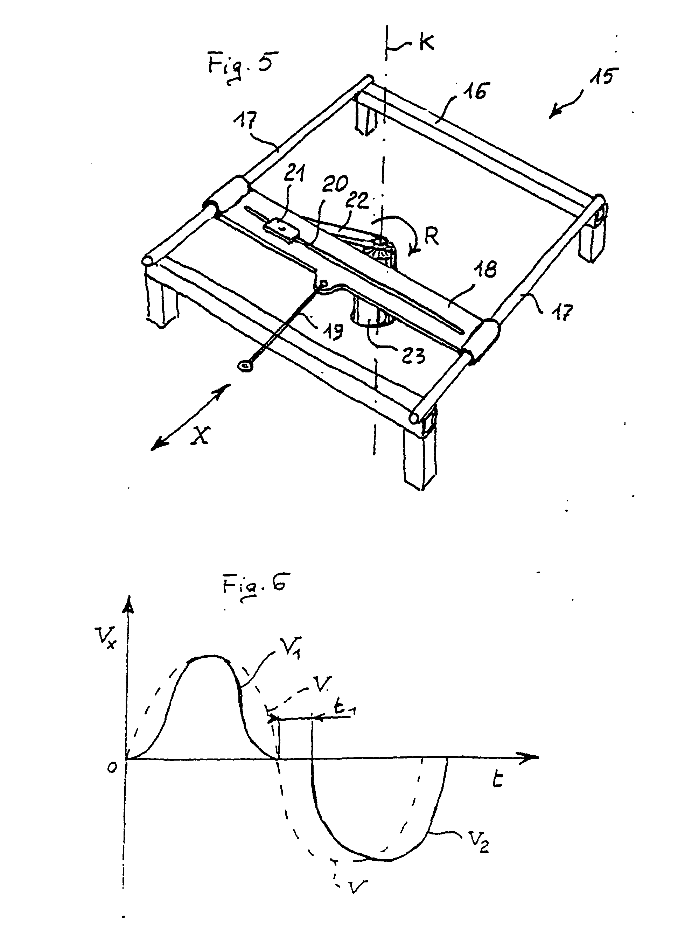

The details of production of the support structure 10, like the systems for articulated connection of the movable portion 14 to the fixed portion 11, and also the means for raising the movable portion 14 in the direction Z, are not the subject of the present invention and will not therefore be discussed further in detail. With regard to the means for moving the movable portion 14 in the direction X, an example is constituted by the operating device 15 illustrated in Figure 5, which comprises a base framework 16 with two linear guides 17 on which is slidably mounted a carriage 18 which can move in the direction X. The carriage 18 may be connected in various ways to the movable portion 14 of the support structure 10, for example by way of a bar 19 or by any other functionally analogous means.

On the carriage 18 a transverse guide 20 is provided for a shuttle 21 or similar means, linked to a crank 22 coupled, directly or with transmission devices interposed, to a motor 23, preferably an electric motor, the speed of which can be adjusted, for example by way of an inverter (not shown) or similar systems. The crank 22 is operated in rotation by the motor 23 about a substantially vertical axis K, in the direction of the arrow R. Purely by way of clarification, the operating device 15 is designed in such a way that uniform rotation of the crank 22 effects the reciprocating sliding of the carriage 18 in the direction X, at a velocity Vₓ thereof which over time assumes a sinusoidal course, as indicated by the dashed line V in the diagram of Figure 6, starting from an origin O corresponding substantially to the completely retracted position of the carriage 18 with respect to the direction of advance A of the movable portion 14 of the support structure 10.

In an initial reference state, corresponding to that illustrated in Figure 1, the containers 13 are placed on the fixed portion 14 of the support structure 10, aligned in the direction X and spaced from one another by the predetermined pitch P. In such a state, some containers 13 will be in the optimum position at the end of the operations for which the transport system is intended. For example, in the case of an installation for the production of paints, some containers will be located beneath dispensing machines which will deliver colorants into them. Other containers may be located at mixing, labelling, weighing, or packing stations, and so on, depending on the type and layout of the installation.

In the initial state in Figure 1, the movable portion 14 is disposed below the fixed portion 11, in a region of non-interference with the containers 13. When it is necessary to move the containers 13 forwards by a pitch P, the movable portion 14 is first of all pushed upwards in the direction Z by the known operating means arranged for the purpose, such as to raise the containers 13 vertically from the fixed portion 11, to reach the position illustrated in Figure 2. At this point, the operation of the means for movement in the direction X, and in particular of the operating device 15 of Figure 5, effects the substantially horizontal displacement of the movable portion 14 in the direction of advance A, for a distance equal to the pitch P, until the state illustrated in Figure 3 is reached.

At this point, the movable portion 14 is lowered in the direction Z to reach the position in Figure 4, in which the containers 13 are again placed on the fixed structure 11. In such state, each container 13 occupies the same position previously occupied by the container 13 immediately preceding it in the line. Further operation of the operating device 15 allows the movable portion 14 to return to the initial position of Figure 1.

The operation of the operating device 15 in the direction of advance A, such as to bring the movable portion 14 from the position in Figure 2 to that in Figure 3, occurs in such a way that the velocity of the movable portion 14 in the direction X is obtained according to a law substantially equivalent to that indicated by the continuous curve V₁, with gradually increasing and decreasing acceleration respectively at the departure position and the arrival position of the movable portion 14. This particular velocity curve, preferably obtained by way of adjustment of the inverter which controls the motor 23, prevents the containers 13 from slipping or shifting, because of the inertia, from their predetermined position on the movable portion 14. Moreover, the displacement of the movable portion 14 is effected only when the movable portion 14 has completely raised the containers 13 from the fixed portion 11.

Similarly, when the movable portion 14 has reached its forward end position, illustrated in Figure 2, the means for movement in the direction X are disabled for a sufficient time t₁ (see Fig. 6) for the movable portion 14 to be lowered to set the containers 13 down on the fixed portion 11 without risk of their slipping or shifting further in the direction X. The return of the movable portion 14 to the initial position may take place according to any law of velocity, similar to the law V₁ of advance, or more simply with a sinusoidal law V₂, obtainable by operating the motor 23 in uniform rotation.

Finally, during the phases of substantially vertical raising and lowering of the movable portion 14 in the direction Z, the means for operation thereof in the direction X are disabled and preferably contribute to maintaining the movable portion 14 in a precisely determined horizontal position, while the movement of the movable portion 14 in the direction X, and in particular in the direction of advance A of the containers 13, takes place with gradual acceleration and deceleration at the ends of travel, while at the same time keeping the vertical position of the movable portion fixed, in the direction Z.

The transport system for containers described above and the method for controlling its operation make it possible to obtain extremely precise movement of the containers 13 in the direction of advance A, without the need to provide centring elements for the containers, even in the case where the transport path for the containers themselves is very long.

With the principle of the invention remaining unchanged, the embodiments and details of production may of course vary widely according to what has been described and illustrated, without thereby departing from the scope of the present invention as it is defined in the appended claims.

## Claims

1. A method for controlling the operation of a transport system for containers, of the type comprising a support structure (10) with at least one fixed portion (11) and a movable portion (14), the containers (13) being disposed in a line on the fixed portion (11) spaced from one another at a predetermined pitch (P), the method comprising the following steps:
- raising the movable portion (14) parallel to a first direction (Z) in order to raise the containers (13) from the fixed portion (11);
- advancing the movable portion (14) parallel to a second direction (X) substantially parallel to a predetermined direction of advance of the containers (13) for a predetermined distance (P), with gradual acceleration and deceleration at the beginning and the end of the forward travel, respectively;
- lowering the movable portion (14) parallel to the first direction (Z) in order to place the containers (13) on the fixed portion (11) again;
- retracting the movable portion (14).

2. A method according to claim 1, wherein the first direction (Z) is substantially vertical, and the second direction (X) is substantially horizontal.

3. A method according to claim 1, wherein the predetermined distance of advance of the movable portion (14) is substantially equal to the pitch (P) between one container (13) and another.

4. A method according to claim 1, wherein the velocity (Vx) of the movable portion (14) over time (t), at least in the phase of advance parallel to the second direction (X), is substantially representable by the curve V1 of Figure 6.

5. A transport system for containers, comprising
- a support structure (10) with a fixed portion (11) and a movable portion (14),
- the movable portion being controlled by at least two separate operating means in two different directions, respectively a first direction (Z) and a second direction (X), the second direction (X) being substantially parallel to a predetermined direction of advance (A) of the containers (13), the first direction (Z) being the direction in which the containers are raised and lowered from said fixed portion (11);
- the operating means (15) for the control of the movable portion (14) in the second direction advancing, in use, the movable portion (14) for a predetermined distance (P), with gradual acceleration and deceleration at the beginning and the end of the forward travel, respectively.

6. A transport system according to claim 5, wherein the operating means (15) comprise an electric motor (23) controlled by an inverter.

7. A transport system according to claim 6, wherein the operating means (15) are connected to the movable portion (14) and are formed in such a manner that constant rotation of the electric motor (23) results in a movement of the movable portion (14) at a substantially sinusoidal velocity in the second direction (X), the electric motor (23) being operated, in use, so that its rotation speed is constant at least the state of operation of the movable portion (14), in the second direction (X).

8. An operating device for a transport system for containers according to claim 5, comprising a device (18) movable in a longitudinal horizontal direction (X), adapted to be connected to the movable portion (14) of the transport system, a motor (23) with an output shaft being operably connected to the movable device by means of operating members (20, 21, 22) adapted to transform a uniform circular motion of the output shaft of the motor (23) into a harmonic reciprocating motion of the movable device (18), at a velocity which is substantially sinusoidal in the longitudinal direction (X).

9. An operating device according to claim 8, comprising a support structure (16) with first linear guide means (17) for the movable device (18), second linear guide means (20, 21) being arranged on the movable device (18) in a substantially orthogonal direction with respect to the first linear guide means (17), crank means (22) being connected on one side to the second linear guide means (20, 21), and on the other side to the motor (23).,

10. An operating device according to claim 8, wherein the motor (23) is an electric motor controlled by an inverter.

## Patentansprüche

1. Verfahren zum Steuern des Betriebs eines Behälterförderers, der so ausgeführt ist, dass er eine Stützkonstruktion (10) mit wenigstens einem festen Teil (11) und einem beweglichen Teil (14) umfasst und die Behälter (13) in einem vorgegebenen Abstand (P) voneinander entfernt in einer Reihe auf dem festen Teil (11) angeordnet sind, wobei das Verfahren die folgenden Schritte umfasst:
- Anheben des beweglichen Teils (14) parallel zu einer ersten Richtung (Z), um die Behälter (13) von dem festen Teil (11) anzuheben;
- Befördern des beweglichen Teils (14) parallel zu einer zweiten Richtung (X), die im Wesentlichen parallel zu einer vorgegebenen Richtung zur Beförderung der Behälter (13) ist, um eine vorgegebene Strecke (P), wobei zu Beginn und am Ende der Vorwärtsbewegung entsprechend schrittweise beschleunigt und abgebremst wird;
- Absenken des beweglichen Teils (14) parallel zu der ersten Richtung (Z), um die Behälter (13) wieder auf dem festen Teil (11) abzusetzen;
- Zurückziehen des beweglichen Teils (14).

2. Verfahren nach Anspruch 1, worin die erste Richtung (Z) im Wesentlichen vertikal und die zweite Richtung (X) im Wesentlichen horizontal verläuft.

3. Verfahren nach Anspruch 1, worin die vorgegebene Strecke der Beförderung des beweglichen Teils (14) im Wesentlichen dem Abstand (P) zwischen den einzelnen Behältern (13) entspricht.

4. Verfahren nach Anspruch 1, worin die Geschwindigkeit (Vx) des beweglichen Teils (14) über die Zeit (t) wenigstens in der Phase der Beförderung parallel zu der zweiten Richtung (X) im Wesentlichen mit der Kurve V1 aus Figur 6 darstellbar ist.

5. Behälterförderer, umfassend
- eine Stützkonstruktion (10) mit einem festen Teil (11) und einem beweglichen Teil (14),
- wobei der bewegliche Teil von wenigstens zwei separaten Betriebsvorrichtungen in zwei verschiedenen Richtungen, entsprechend einer ersten Richtung (Z) und einer zweiten Richtung (X), gesteuert wird, wobei die zweite Richtung (X) im Wesentlichen parallel zu einer vorgegebenen Richtung der Beförderung (A) der Behälter (13) ist und die erste Richtung (Z) die Richtung ist, in der die Behälter von dem festen Teil (11) angehoben und auf dieses abgesenkt werden;
- wobei die Betriebsvorrichtungen (15) zur Steuerung des beweglichen Teils (14) den beweglichen Teil (14) im Betrieb um eine vorgegebene Strecke (P) in der zweiten Richtung befördern, wobei zu Beginn und am Ende der Vorwärtsbewegung entsprechend schrittweise beschleunigt und abgebremst wird.

6. Fördersystem nach Anspruch 5, worin die Betriebsvorrichtungen (15) einen durch einen Wechselrichter gesteuerten, elektrischen Motor (23) umfassen.

7. Fördersystem nach Anspruch 6, worin die Betriebsvorrichtungen (15) mit dem beweglichen Teil (14) verbunden sind und so ausgebildet sind, dass eine konstante Drehbewegung des elektrischen Motors (23) zu einer Bewegung des beweglichen Teils (14) mit einer im Wesentlichen sinusförmigen Geschwindigkeit in der zweiten Richtung (X) führt, wobei der elektrische Motor (23) im Betrieb so betrieben wird, dass seine Drehzahl wenigstens im Betriebszustand des beweglichen Teils (14) in der zweiten Richtung (X) konstant ist.

8. Steuervorrichtung für einen Behälterförderer gemäß Anspruch 5, die eine Vorrichtung (18), die in einer horizontalen Längsrichtung (X) beweglich ist und dazu geeignet ist, mit dem beweglichen Teil (14) des Förderers verbunden zu werden, einen Motor (23) mit einer Abtriebswelle, die funktionsfähig durch Steuerelemente (20, 21, 22), die dazu geeignet sind, eine gleichmäßige Drehbewegung der Abtriebswelle des Motors (23) bei einer in der Längsrichtung (X) im Wesentlichen sinusförmigen Geschwindigkeit in eine harmonische Kolbenbewegung der beweglichen Vorrichtung (18) umzuwandeln, mit der beweglichen Vorrichtung verbunden ist, umfasst.

9. Steuervorrichtung nach Anspruch 8, die eine Stützkonstruktion (16) mit ersten linearen Führungselementen (17) für die bewegliche Vorrichtung (18), zweiten linearen Führungselementen (20, 21), die mit einer bezogen auf die ersten linearen Führungselemente (17) im Wesentlichen orthogonalen Ausrichtung auf der beweglichen Vorrichtung (18) angeordnet sind, Kurbelelementen (22), die auf einer Seite mit den zweiten linearen Führungselementen (20, 21) und auf der anderen Seite mit dem Motor (23) verbunden sind, umfasst.

10. Steuervorrichtung nach Anspruch 8, worin der Motor (23) ein durch einen Wechselrichter gesteuerter, elektrischer Motor ist.

## Revendications

1. Procédé de commande de l'actionnement d'un transporteur de contenants, du type comprenant une structure de support (10) ayant au moins une partie fixe (11) et une partie mobile (14), les contenants (13) étant disposés alignés sur la partie fixe (11) espacés les uns des autres selon un pas prédéterminé (P), le procédé comprenant les étapes consistant à :
- élever la partie mobile (14) parallèlement à une première direction (Z) afin d'élever les contenants (13) à partir de la partie fixe (11) ;
- faire avancer la partie mobile (14) parallèlement à une deuxième direction (X), sensiblement parallèle à une direction d'avancement prédéterminée des contenants (13), sur une distance prédéterminée (P), avec une accélération et une décélération graduelles au début et à la fin de la course vers l'avant, respectivement ;
- abaisser la partie mobile (14) parallèlement à la première direction (Z) afin de replacer les contenants (13) sur la partie fixe (11) ;
- rétracter la partie mobile (14).

2. Procédé selon la revendication 1, dans lequel la première direction (Z) est sensiblement verticale, et la deuxième direction (X) est sensiblement horizontale.

3. Procédé selon la revendication 1, dans lequel la distance d'avancement prédéterminée de la partie mobile (14) est sensiblement égale au pas (P) qui existe entre un contenant (13) et un autre contenant.

4. Procédé selon la revendication 1, dans lequel la vitesse (Vx) de la partie mobile (14) par rapport au temps (t), au moins au cours de la phase d'avancement parallèle à la deuxième direction (X), peut sensiblement être représentée par la courbe V1 de la figure 6.

5. Transporteur de contenants comprenant
- une structure de support (10) ayant une partie fixe (11) et une partie mobile (14),
- la partie mobile étant commandée par au moins deux moyens d'actionnement séparés dans deux directions différentes, respectivement une première direction (Z) et une deuxième direction (X), la deuxième direction (X) étant sensiblement parallèle à une direction d'avancement (A) prédéterminée des contenants (13), la première direction (Z) correspondant à la direction dans laquelle les contenants sont élevés et abaissés à partir de ladite partie fixe (11) ;
- le moyen d'actionnement (15) permettant la commande de la partie mobile (14) dans la deuxième direction faisant avancer, en cours d'utilisation, la partie mobile (14) sur une distance prédéterminée (P), avec une accélération et une décélération graduelles au début et à la fin de la course vers l'avant, respectivement.

6. Transporteur selon la revendication 5, dans lequel, le moyen d'actionnement (15) comprend un moteur électrique (23) commandé par un inverseur.

7. Transporteur selon la revendication 6, dans lequel, le moyen d'actionnement (15) est raccordé à la partie mobile (14) et est formé de telle sorte que la rotation constante du moteur électrique (23) génère un mouvement de la partie mobile (14) à une vitesse sensiblement sinusoïdale dans la deuxième direction (X), le moteur électrique (23) étant actionné, en cours d'utilisation, de telle sorte que sa vitesse de rotation est constante au moins dans l'état d'actionnement de la partie mobile (14) dans la deuxième direction (X).

8. Dispositif d'actionnement pour un transporteur de contenants selon la revendication 5, comprenant un dispositif (18) pouvant être déplacé dans une direction horizontale longitudinale (X), conçu pour être raccordé à la partie mobile (14) du transporteur, un moteur (23) ayant un arbre de sortie étant raccordé de manière opérationnelle au dispositif mobile au moyen des éléments d'actionnement (20, 21, 22) conçus pour transformer un mouvement circulaire uniforme de l'arbre de sortie du moteur (23) en un mouvement de va-et-vient harmonique du dispositif mobile (18), à une vitesse qui est sensiblement sinusoïdale dans la direction longitudinale (X).

9. Dispositif d'actionnement selon la revendication 8, comprenant une structure de support (16) ayant un premier moyen de guidage linéaire (17) pour le dispositif mobile (18), un deuxième moyen de guidage linéaire (20, 21) qui est agencé sur le dispositif mobile (18) dans une direction sensiblement orthogonale à celle du premier moyen de guidage linéaire (17), un moyen formant bielle (22) qui est raccordé d'un côté au deuxième moyen de guidage linéaire (20, 21), et de l'autre côté au moteur (23).

10. Dispositif d'actionnement selon la revendication 8, dans lequel le moteur (23) est un moteur électrique commandé par un inverseur.
